# EUROPEAN PATENT SPECIFICATION

(11) **EP 1 329 489 B1**
(45) Date of publication and mention of the grant of the patent: **17.05.2006**
(21) Application number: 02259025.1
(22) Date of filing: 31.12.2002
(51) Int. Cl.: C09J 5/02, B41J 2/175

(54) **Method of preparing a surface for adhesion**
Verfahren zur Vorbereitung eines Fügesubstrats
Procédé de préparation d'une surface pour l'adhésion

(30) Priority: 18.01.2002 US 52815
(43) Date of publication of application: 23.07.2003
(73) Proprietor: Hewlett-Packard Company, Palo Alto, CA 94304 (US)
(72) Inventor: Wimmer, Phillip L., Lebanon, OR 97355 (US); Otis, Charles, Corvallis, OR 97330 (US); Smith, Joshua W., Corvallis, OR 97330 (US)
(74) Representative: Jackson, Richard Eric

(56) References cited:
- EP-A- 0 576 007
- US-A- 4 745 018
- DINI J W: "Laser Surface Modification Offers Promise for Various Coating Processes and Substrates" METAL FINISHING, ELSEVIER SCIENCE PUBLISHING, NEW YORK, NY, US, vol. 95, no. 10, 1 October 1997 (1997-10-01), page 10,12,14 XP004091541 ISSN: 0026-0576

## Description

### Field of the Invention

The present invention relates generally to preparation of a surface for adhesion. More particularly, the invention provides a method of improving adhesion along interfaces between components in a chemically hostile environment.

### Background

Adhesives are commonly used to join components in a vast range of applications. In some applications, the effectiveness of adhesives may be compromised by the presence of a chemically hostile environment. An example of a chemically hostile environment is a printing system, where corrosive ink may adversely affect adhesive joints in ink containers, ink delivery systems and print cartridges.

Typical print cartridges contain a print engine and at least a portion of the ink supply that provides the ink drops used to print ink in a printer. The durability and reliability of the print cartridges may effect a user's satisfaction with the printer. However, the effective life of a print cartridge may be shortened due to stresses inherent in being an ink-containment device. For example, the corrosive effect of ink, temperature changes, and physical stresses, all affect the durability of the print cartridge.

Each print cartridge is an assembly of components that are in many cases bound together with an adhesive and/or coated with a coating. The resulting assembly contains a large number of interfaces, where one component of the print cartridge contacts another region or component of the print cartridge to form a surface with a common boundary. Each of these interfaces, or joints, requires good long-term interfacial adhesion. If there is poor interfacial adhesion, ink may penetrate the joint and compromise the seal between a first and second component in the print cartridge. Such degradation of an interface may affect reliability of the printer, and may shorten the productive lifetime of the print cartridge.

Increasing the strength of these interfaces is likely to improve the reliability and useful life of the print cartridges. The typical interface occurs between at least two components of a print cartridge where one of the components is sufficiently compliant at some stage of the assembly process to allow it to conform to and bond to the second component. In this sense one component may be an adhesive or coating and the other component a substrate or adherend to which the adhesive may be bonded. By strengthening the bond between the adhesive and the adherend, the interface is less likely to be compromised by ink. One method of increasing the strength of the interface may be accomplished by changing the surface topography of the adherend.

Surface treatments that improve adhesion by affecting the surface topography of the adherend are known. Many of these surface treatments are methods that roughen the surface of the adherend. For example, chemical etching, plasma and reactive ion etching, mechanical abrasion, sand blasting, etc. are all treatments that may have some effect on surface topography.

Although such surface treatments may increase the adhesion between the adherend and the adhesive, there may be drawbacks. For example, the surface treatments that create the most effective surfaces for adhesion may negatively impact the production process by decreasing the yield, increasing the cost and production time, and/or affecting the geometry of the parts. Some of the surface treatments, such as plasma surface treatment, may improve the lifetime of the print cartridges, but require use of non-standard environments such as vacuum, increasing both production time and cost. Furthermore, introducing additional roughness to the surface of an adherend mold may change the surface topography of the adherend, but may also make part removal from the mold difficult. Other surface treatments, such as mechanical abrasion and sand blasting may introduce undesirable contaminants into the manufacturing process affecting the yield and the quality of the print cartridge. While the act of roughening, such as abrasion, may increase the strength of a joint, the structures created by such methods are uncontrolled and not optimized for adhesion. Additionally, many of these types of surface treatment methods are environmentally unfriendly.

Metal Finishing, Elsevier Science Publishing, New York, vol. 95, no.10, pages 10, 12, 14 discloses the use of lasers to modify surface characteristics. U.S. 4,745,018 discloses irradiation of FRP surfaces for bonding using pulsed excimer lasers. EP 0 576 007 A2 discloses abiating a surface of a member with an excimer laser to form a nozzle for a printhead.

Moreover, during the assembly of print cartridges, there are instances where it is desirable to surface treat a particular surface or portion of a print cartridge component, but treatment of other surfaces on that same component would be detrimental. Masking off these regions from the surface treatment can add significant cost. Surface treatments that rely on chemical alteration of the surface for the adhesion improvement, such as plasma, RIE and corona, are often unstable and must be bonded immediately after treatment for optimal results thereby adding an element of complexity to the manufacturing process. There is therefore a need for systems and methods that provide improved surface treatments in a cost effective manner for components prior to adhesive bonding.

### Summary of the Invention

The present invention is directed to a method of preparing a surface for adhesion as defined in claims 1 to 6, an interface as claim 7 and a printer as defined in claim 8. The method includes providing an initiator that is configured to shadow a portion of a surface of a substrate, directing a laser toward the surface of the substrate to effect ablation of a non-shadowed portion of the substrate, and forming structures on the surface of the substrate. An adhesive in then applied to the surface of the substrate.

### Description of the Figures

Fig. 1 is an exploded isometric view of an exemplary print cartridge showing interfaces between components of a print cartridge which may be treated according to one embodiment of the present invention.
Fig. 2 is a simplified side view of an interface between two components as known in the prior art. Fig. 2 further shows a typical fracture line that may occur when the interface is under stress.
Fig. 3 is a schematic diagram of a laser system by which one embodiment of the present invention may be implemented.
Fig. 4 is a schematic flowchart demonstrating a method of preparing a surface for adhesion according to one embodiment of the present invention.
Fig. 5A is a somewhat simplified view of conical structures on the surface of a substrate constructed according to one embodiment of the present invention.
Fig. 5B is a somewhat simplified view of conical structures on the surface of a substrate constructed according to another embodiment of the present invention.
Fig. 6 is a graphical representation of the fluence of the laser as a function of the etch depth of the laser, showing the ablation thresholds of a substrate and ablation debris.
Fig. 7 is a simplified representation of a method of preparing a surface of a substrate for adhesion according to an alternate embodiment of the present invention.

### Detailed Description of the Invention

The present invention is directed to a method of changing the surface topography of a surface to improve adhesion. The method includes treating a substrate with a laser to form a plurality of conical structures on the surface of the substrate. An adhesive is then applied to the treated surface. The aforementioned treatment of the substrate effectively increases the adherence of the adhesive to the substrate.

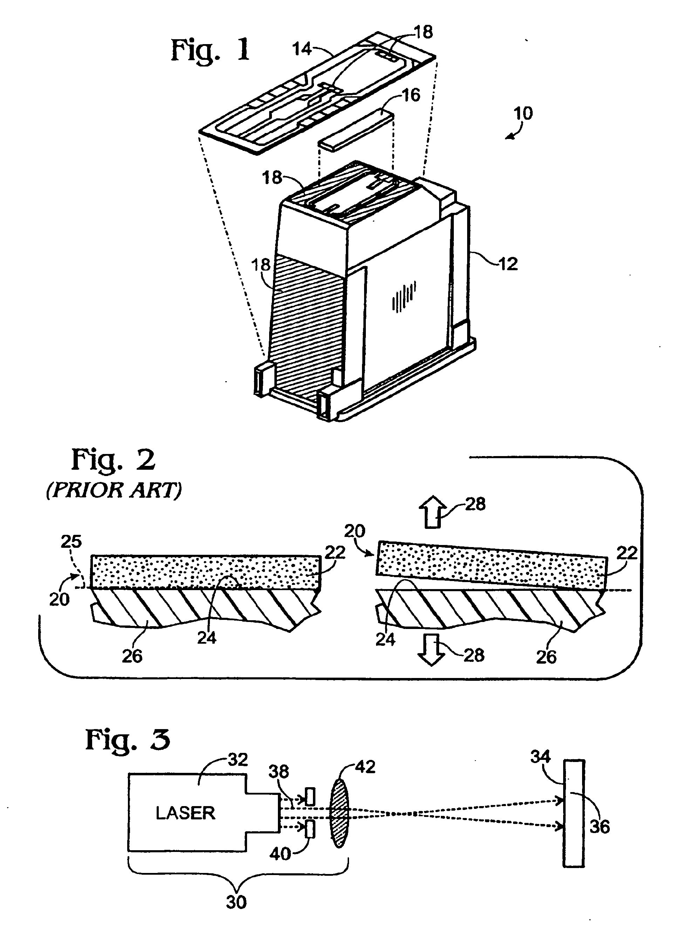

Fig. 1 illustrates one environment in which the present invention may be implemented, namely, a print cartridge assembly for a printer. High quality adhesive joints are important in many fabricated components, including those for print cartridges. In particular, the strength and long-term durability of joints between components may impact the effective life of the assembly. For example, degradation of joint interfaces in print cartridges for printers may decrease the useable life of the print cartridge. By improving joint durability and joint strength, the life of the print cartridge may be extended. The present invention involves a method of pre-treating surfaces to improve adhesion between a substrate and an adhesive. Although the discussion is directed to print cartridge interfaces, it will be appreciated that the method may be applicable to any surface where short-term strength or long-term interface durability is required. Thus, although the present invention is illustrated and described in a print cartridge environment, the method may also be used on other components that are adhesively coupled during or after manufacture.

Adhesion, as used herein, refers to improvement in the resistance of the joint to short-term and long-term mechanical, thermal and chemical stresses and combinations of these both static and cyclical. Improved adhesion means the joint will last longer for a given stress and or resist a higher level of stress or combination of stresses.

An exemplary print cartridge assembly is generally indicated at 10 in Fig. 1. Such print cartridge is representative of a typical print cartridge for use in a printer. Print cartridge 10 includes a body 12 that may serve as an ink containment device, and typically is made of a rigid material such as an engineering plastic. Specific examples of materials that may be used in the fabrication of the pen body include: engineering plastics such as liquid crystal polymer (LCP) plastic, polyphenylene sulfide, (PPS), polysulfone (PS) and blends as well as nonpolymeric materials such as ceramics, glasses, silicon, metals and other suitable materials. It will be appreciated that some of these materials, particularly LCP may be difficult to adhere to, especially in the presence of an aggressive chemical, such as ink.

Multiple components may be attached to body 12 of print cartridge 10 using an adhesive. For example, it may be desirable to attach a flexible circuit 14 to body 12. Flexible circuits may be fabricated from materials that are difficult to adhere to including polyimide film, (e.g. KAPTON®, UPILEX®) and polyethtylene tetraphalate. Similarly, a thermal inkjet print engine 16 may be attached to print cartridge body 12. It may be desirable to protect certain portions of flex circuit 14 from contact with ink by providing a coating or a laminated film that protects the electrical circuitry from contact with ink. Surface treating the flex circuit to improve adhesion of the coating or film may be desirable. The interfaces between either the circuit 14 or print engine 16 and body 12 are illustrative of the types of interfaces which may be improved by pre-treating the surface of at least one of the components according to the method described below. More particularly, surfaces 18 on print cartridge 10 are areas where a protective coating may be used to encapsulate the electrical connections between the flex circuit and the print engine and represent areas for the laser surface treatment described herein.

Fig. 2 shows interfacial failure typical in the previous print cartridge interfaces. An interface, or joint, between two components consisting of an adhesive and a substrate is shown generally at 20. Interface 20 includes a first component, or substrate 26 (such as the print cartridge body and/or flex circuit), and a second component typically consisting of an adhesive (or coating) 22 applied to the substrate. More particularly, an adhesive or coating 22 has been applied to surface 24 of substrate 26. Upon stress 28, or over a period of time, the adhesive bond between adhesive 22 and substrate 26 may "fail." Typically such failure will occur along the interface between adhesive 22 and substrate 26 such that adhesive 22 separates, or peels away (generally indicated by fracture line 25) from surface 24 of substrate 26 leaving little or no adhesive attached to the surface 24. The above-described interfacial failure may curtail the useful life of a print cartridge in a printer.

Adhesive, as used herein, is generally defined as any substance that may be coupled to the treated surface of the substrate. Adhesive includes any material that provides or promotes adhesion between the substrate and the material itself. Any material that may flow or conform and adhere to the surface of the substrate may be an adhesive. For example, conventional polymeric adhesives may be used, liquid adhesives, hot melt adhesives, liquid coatings including thermoplastic film adhesives, thermosetting film adhesives, epoxy films. In addition, the term adhesive refers to, electro-deposited metal, cast metal, vapor deposited materials (organic, inorganic or metallic), organic and inorganic coatings. The adhesive also may itself be a second component that is to be attached to the substrate for example a part may be treated and a second more compliant part may be pressed into the treated part creating a bond.

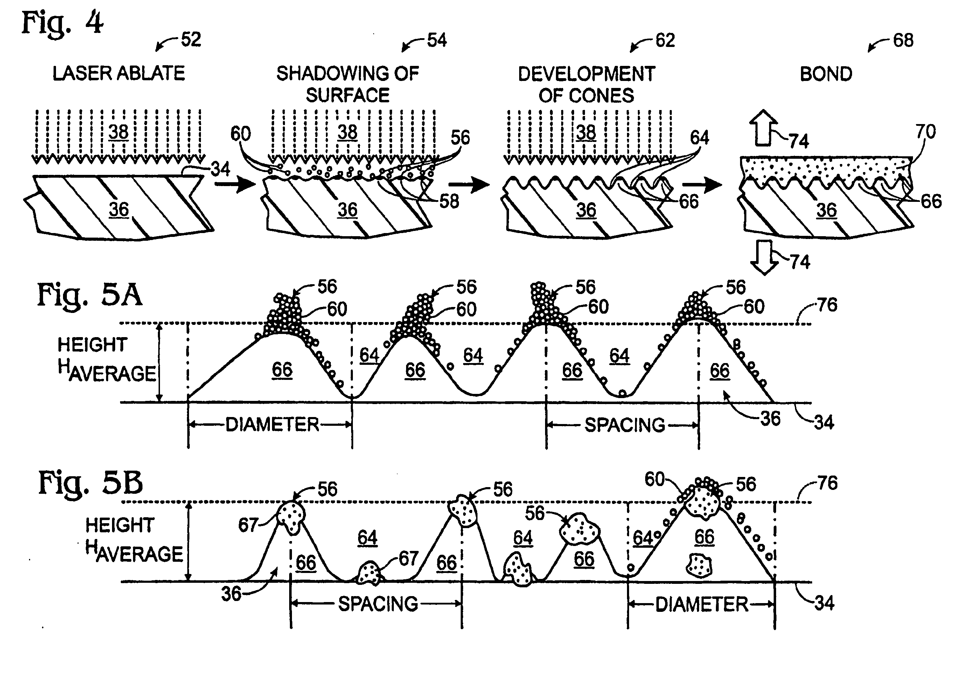

A laser system in which one embodiment of the present invention may be implemented is shown generally at 30 in Fig. 3. Laser system 30 includes a laser 32 configured to directs photons 38 at surface 34 of substrate 36. In the presently described system, laser 32 may be a Krypton Fluoride excimer laser that provides photons at 248nm. However, it should be understood that any laser which is capable of causing the surface of the substrate to ablate may be used, including gas, liquid and solid state lasers as well as any other light source that provides sufficient fluence to remove material. Typically, chemical gas lasers, such as excimer lasers are used because polymers, such as the LCP plastics, and polyimides used in print cartridges, absorb radiation in the UV wavelength range. By choosing a source that provides the desired wavelength one can also treat other materials that may be ablated with longer or shorter wavelengths. Typically, excimer lasers operate in the UV range. The optimal laser parameters for the method, including intensity, repetition rate and number of pulses, typically will depend on the substrate material, such as LCP plastic or the like, and the specific arrangement of the laser system as described in the present example.

As illustrated, laser 32 may be directed toward a surface 34 of a substrate 36 where photons 38 impinge upon the surface of the substrate. The laser light or photons 38 emitted from laser 32 may be directed through a beam stop 40 which functions to direct a portion of the laser light emitted from laser 32 toward substrate 36. Light 38 may also be directed through a lens 42 (or a plurality of lenses) which may operate to focus laser light 38 onto surface 34 of substrate 36. Those skilled in the art will recognize that there are a number of ways to condition the light and direct it towards the substrate, the above system being only one simple method. For example lenses, masks, homoganizers, mirrors, beam stops, attenuators and polarizers are typical elements used to condition light. It is also useful to provide for the mounting and positioning of the part in front of the beam. Parts may be flood treated or they may be moved across the beam using an X-Y stage or turning mirror apparatus may be used to scan the beam across the part.

The fluence of the laser may be adjusted to cause ablation of the surface of the substrate. Fluence, as used herein, refers to the number of photons per unit area, per unit time. Ablation, as used herein, refers to the removal of material through the interaction of the laser with the surface of the substrate. Through this interaction, the surface of the substrate is activated such that the surface bonds of the substrate are broken and surface material is displaced away from the surface of the substrate. The substrate may be any suitable material including those used in a print cartridge assembly. Additionally, the substrate may include materials with poor wetting characteristics, such as TEFLON®.

As alluded to above, the fluence of the laser typically is adjusted based on the characteristics of the substrate material that is to be ablated. The fluence is also typically adjusted such that the laser radiation ablates the substrate, but does not ablate initiators which are the precursors of structures formed by the ablation process as will be described below. The laser treatment thus will result in changes in the surface topography of the substrate. The effect of this change in topography is to create a rougher surface with a correspondingly larger surface area to improve adhesion.

More particularly and described in more detail below in connection with Figs. 4-6, the appropriately adjusted fluence may cause formation of structures (also referred to as cones) on the surface of the substrate. It should be understood that although the cones as shown are generally uniform in size and shape, such representations are for illustrative purposes only, and such cones may vary greatly in both size, shape, wall slope, spatial uniformity, density, etc., depending on the substrate material, the laser and the beam conditioning used.

Any material that can be altered chemically and/or physically by the application of photons is a potential candidate for the laser surface treatment, herein described. In general, for a given material, a light source that has a wavelength that can degrade a particular bond or bonds within the material is chosen. In other words, a material that absorbs energy of a given wavelength sufficiently to cause ablation of material from the surface may be suitable for the laser surface treatment. In particular, materials which incorporate chemical bonds that can be disturbed or broken by the application of light. In particular, materials that incorporate pairs of aromatic rings are likely candidates because a free electron can be accessed by photons in the UV range resulting in photochemical ablation. Thus, materials which have active chromophores (e.g. polyimides, polysulfones, epoxies, engineering plastics) or polymers which may be doped to make the polymer active are suitable for the laser surface treatment. Likewise, the laser surface treatment also may be applied to metals, silica, silicates, glasses and ceramics.

Advantageously, the present method permits laser light to be directed to expose specific areas of the substrate that are intended to receive the laser surface treatment. Areas that do not require laser surface treatment may be masked off, or otherwise not exposed to the laser, such that they remain unaltered. It is also an advantage that the treatment may be performed under ambient conditions, vacuum is not required, and because the treatment is dependent primarily on roughness, the treatment does not degrade over time. Furthermore, the treatment affects only the surface and near surface of the material leaving the bulk of the substrate unaffected. Furthermore, the treatment may be solvent free and requires no hazardous liquid disposal and is applicable to a wide range of adhesive-substrate materials. It is an inherent advantage that the nature of the treatment incorporates removal of the surface of the substrate such that surface defects, weak surface layers and surface contamination are removed during treatment.

The present method of preparing the surface of a substrate to eliminate interfacial failure is demonstrated generally in Fig. 4. As described above, laser light 38 is directed toward surface 34 of substrate 36. The laser treatment of the surface results in a change in the surface topography. Thus, in the first illustrated step, at 52, surface 34 of substrate 36 is exposed to photons 38 emitted from a laser (typically an excimer laser as indicated previously). These photons are absorbed by the surface of the substrate. The fluence (number of photons per area, per laser pulse) may be adjusted such that the surface of the substrate ablates.

As shown in the second step at 54, cone initiators 56 shield or shadow discrete portions 58 of the surface of substrate 36. These shadowed portions do not ablate at the same rate that the substrate ablates, thereby reducing the local ablation rate in the shadowed region of the surface under the initiator and thus, "initiate" the formation of structures on the surface of the substrate. Typically, these structures form as cones that protrude from the surface of the substrate in the direction of the incident light. Cone initiators 56 do not ablate at all or have a higher ablation threshold than the underlying substrate. Therefore, the laser fluence may be adjusted such that substrate 36 ablates, but the shadowed material 58 underlying cone initiators 56 does not. As described in more detail below, the cone initiators may be a by-product or char 60 that result from ablation of the surface of the substrate that is redeposited on the surface. This char may ablate at a higher fluence than the surface of the substrate and thus, protect underlying portions of the surface. Accordingly, ablation of the exposed surface (the non-shadowed regions) of the substrate typically occurs at a faster rate than portions which are shadowed by the cone initiators. Initiators are precursors to the structures causing their initiation and growth. Once the structures are created, the initiators may be incorporated into the adhesive bond with the structures or removed prior to interface formation.

During ablation, cones are further developed as shown at 62. Cone initiators 56 continue to shadow portions of the surface, and thus, the exposed surfaces are ablated at a faster rate than the shadowed portions. Ablation continues to eat at the surface forming valleys 64 which define cones 66. Typically, cone development substantially terminates when the side wall surfaces of the cones become sufficiently steep and the spacing between adjacent cones tightens to the point that cone bases impinge upon each other. Specifically, the angle of incidence of the laser beam reduces the fluence efficiency sufficiently along the side walls that it falls below the ablation threshold. In the absence of perpendicular surface between cones, ablation is terminated. Redeposition of debris on the sides of the cones and in the spaces between cones may also aid in the termination. Of course, termination may be caused at any time by removing the laser light.

As shown at 68, an adhesive 70 may be bonded to the treated surface of the first component or substrate 36 as illustrated at 68. The structures on the surface of the substrate improve adhesion. Application of the same force which caused a fracture along the prior art interface in Fig. 2 (shown by arrows 74 in Fig. 4) typically will not result in any interfacial failure in the presently described interface. The bond between the two components remains strong and resilient to the peeling away typical of the previous interfaces. This strong bond is due to the change in topography of the surface of the substrate. Cones 66 effectively increase the roughness of the substrate surface, providing additional surface area and interlocking sites for the adhesive to attach to. The different chemistry makeup of cones 66 (which when formed via redeposited cone initiators are defined largely by ablation debris) may also affect the chemical interaction between the adhesive and the substrate, thereby providing additional strength to the interface. Moreover, coating the surface of the substrate with a poor wetting material prior to applying the adhesive typically has little or no effect on the improved adhesion characteristics of the laser treated substrate.

Numerous types of cone initiators may be used in the present method and are within the scope of this invention. For example, and described in more detail below, cone initiators 56 may be intrinsic particles mixed within the substrate or nonhomogeneities within the material, particles deposited on the surface of the substrate or particles redeposited on the substrate as a result of the ablation process. Each of the particles described above typically has a higher ablation threshold (the fluence at which the material ablates) then the ablation threshold of the underlying substrate. Particles, as used herein, are any structure of any shape that may be used to shadow a portion of the substrate when placed between the oncoming light beam and the substrate.

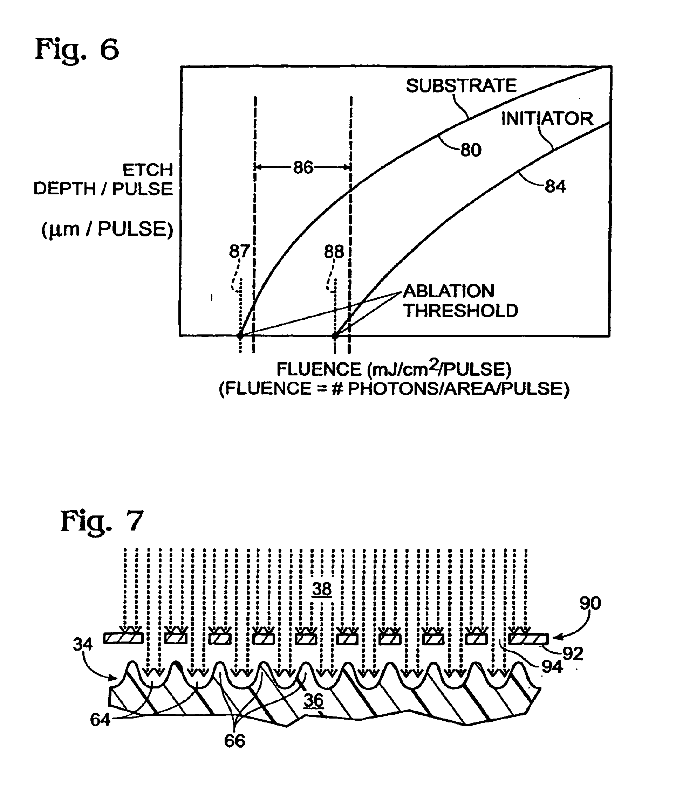

As briefly discussed above, cone initiators 56 may be by-products of the ablation process. For example, ablation of substrate material 36 may cause formation of char or ash 60 (also referred to as ablation debris). This ablation debris 60 may be re-deposited randomly on the surface of substrate 36. Ablation debris 60 may have a higher ablation threshold (see Fig. 6) than substrate 36 such that the ablation debris does not ablate at the same fluence that the surface of the substrate ablates. By adjusting the laser to a fluence below the ablation threshold of the debris 88 but above the ablation threshold of the substrate 87, the surface of the substrate not shielded by the debris may ablate while the substrate material shielded by the debris does not ablate. As the exposed surface of the substrate is removed via ablation, valleys are formed in the surface of the substrate. Cones result from the formation of valleys and the deposit of ablation debris on the surface of the substrate.

It will be appreciated that the number of cones formed via redeposited ablation debris is self-limiting. Initially, cone density is influenced by the random deposit of ablation debris on the surface of the substrate. As ablation continues, the side wall surfaces of the cones become sufficiently steep that the angle of incidence of the laser beam reduces the fluence efficiency sufficiently that it falls below the ablation threshold. In addition, there may be additional redeposition of debris along the side walls of the cones that limits ablation. Eventually the process slows to a rate where further processing provides insufficient return. Thereafter, ablation of the substrate is effectively terminated. The density and size of the cones is thus dependent on the number of pulses (depth of valleys), the rate of pulsing (frequency which influences debris deposition) and fluence.

It should be understood that redeposited ablation debris creates an unregulated arrangement of cones. More particularly, the arrangement of cones on the surface of the substrate may be non-uniform due to the random deposit of ablation debris from the ablation of the substrate. Similarly, where the cone initiators are simply pre-mixed within the substrate, the cones positions on the substrate may also be random.

The position of the particles within the substrate may be random and thus ablation of the substrate may result in a random arrangement of cones. However, although the distribution may be random, the density and size of the cones may be regulated by controlling the density and size of the pre-mixed cone initiators.

Furthermore, the arrangement and position of cones may be regulated. As described below, some types of cone initiators allow one to control the arrangement of cones. For example, the substrate may have more resistant particles (higher ablation threshold) spread in a pattern on the surface of the substrate. An atomized spray or sputtering system may be used to apply such a distribution of particles on the surface of the substrate. Alternatively, as described and illustrated below in Fig. 7, a mask may be used to project shadowed areas onto the surface of the substrate. However, regardless of the type of cone initiator, the cone initiator functions by shielding a region of the surface of the substrate, preventing the laser from ablating the entire surface.

Fig. 5A shows a simplified illustration of cones 66 formed via redeposited cone initiators. The tip of each cone shows clumps of ablation debris 60 resettled on the original surface 76 of substrate 36 during initial ablation of the substrate surface. These clumps have served as cone initiators 56, which shielded portions of the original surface 76 of substrate 36, preventing ablation of these portions. Ablation of the non-shielded portions continues, cutting into the substrate and forming valleys 64 and defining cones 66. The ablation process may cut a defined average distance into the original substrate surface 76, the magnitude of which is determined by the number of pulses, the initiator density and the amount of material removed per pulse. Note that the redeposition process occurs continuously during the ablation process resulting in initiation of cones at various times during ablation. Cones that initiate later in the process will have a height less than cones formed earlier in the process. Uniform cone height is not required for improved adhesion, but may be obtained using some of the alternative cone forming mechanisms such as masking and deposited initiators.

In the case where initiators are mixed in the substrate, the ablation process exposes these initiators, as shown in Fig. 5B. Thus, as illustrated, cones 66 are formed via cone initiators 56 which shadow a portion of the original surface of the substrate. The cone initiators may be intrinsic particles 67 contained within the substrate or spread on the substrate. Ablation debris 60 may resettle on the surface, but in this case, it may not necessary for cone development or adhesion. In the case where the initiators are mixed in the substrate, the initiators may form a significant portion of the cones and could be an element in the adhesive interlocking process.

Cones 66 are generally mound-type structures, but may be of various configurations. The structures may be on the order of 0.1 to 1000 um. For microelectronics applications, such as ink jet cartridges, smaller structures (e.g. 0.1-100 um) may be more desirable. Generally, the cones formed by the redeposition mechanism in LCP plastic and KAPTON® may be on the order of approximately 2-5 µm (microns) from peak to valley and a similar dimension from peak to peak. Alternatively, significant adhesion improvement was observed for structures created using a metal screen as an imaged initiator in KAPTON®, silicon and alumina ceramic which had size scale on the order of 50 to 100 µm. The height and density of the structures, however, may depend on the number of pulses, fluence, frequency, density of initiators, the type of substrate material, and/or the type of initiator employed.

The wall angle of these features is on the order of 45 degrees. Wall angles somewhat less than 45 degrees may also be effective. Wall angles up to 90 degrees and even overhanging, mushroom like, are effective provided the adhesive is sufficiently compliant to fully encapsulate the shape of the structure.

The shape of the structures when viewed in the plane of the substrate is nominally rounded in the case of cones formed be redeposition, however, cones that are closely spaced impinge upon one another which may result in distortion of the rounded shape. Cones formed by projection, deposition or intrinsic methods may be rounded or take the shape of the initiator. Imaged structures may be made in any shape desired, from cones to ribs to fancy shapes or holes, provided they are of a size scale sufficient to promote interlocking of the adhesive.

Fig. 6 is a graphical representation illustrating the parameters necessary for redeposited cone formation using ablation debris. As indicated above, the fluence for the present method typically must exceed a predetermined threshold before ablation of the substrate occurs. If the fluence is below this threshold (as indicated at 87), then there will be little or no ablation and no removal of the substrate surface. The ablation threshold is dependent on the characteristics of the material being ablated and the light source.

The ablation thresholds of both the substrate and the ablation debris may be readily determined using methods known to the art. Typical results are shown schematically in a plot in Fig. 6, where the etch depth/pulse is plotted against the fluence. For example, ablation of a typical substrate is plotted at 80. The substrate ablation threshold identifies where the substrate material begins to ablate at a measurable rate. Similarly, ablation of the ablation debris emitted by the substrate is plotted at 84, with a corresponding ablation debris ablation threshold as indicated. Above or at the ablation debris ablation threshold, as indicated by 88, the inherent formation of cones is retarded because the cone initiators themselves will be ablated concurrently with the substrate material. A range of fluences, indicated at 86, is representative of a range of fluences where redeposited cone formation may be practically possible. If the initiators are deposited or intrinsic, it is desirable to choose an initiator material with an ablation curve 84 that allows a large range, 86, to facilitate manufacturing control. The process window may also be optimized by choice of the proper type of laser.

A specific example of a material that forms redeposited cones is one of the materials, KAPTON® E, used to make the flexible circuits used in print cartridge assemblies, 10 in Fig. 1. This polyimide material forms redeposited cones at fluences of 55-75 mJ/cm2/pulse using 248 nm eximer at a few up to 500 shots and frequencies from 1 to at least 200 Hz. 60 mJ/cm2/pulse, 70 shots at 200 Hz being optimal. As is known in the art, the measurement of fluence varies with the measurement techniques and beam delivery system. Therefore, the exact processing conditions for a given material needs to be determined experimentally on the system being used for the process.

A second example is the LCP material used for the ink containment vessel in the print cartridge assembly. The material Vectra B130 from Ticona Co. contains LCP polymer, carbon black filler and glass fiber reinforcement. Cones can be formed using fluences from 80 to 200 mJ/cm2/pulse using a 248 nm excimer laser operating at frequencies from 1-200 Hz. Cones are evident after a few shots and are still effective after 500 shots. From a manufacturing stand point, high frequency and low shot count are desirable, and from an adhesion standpoint sufficient cones to saturate the surface are desirable corresponding to 50-100 shots and 120 to 180 mJ/cm2/pulse. Typically 120 mJ/cm2/pulse and 70 shots at 200 Hz are adequate. The resulting cone structure is 2-5 µm in size and 2-5 µm in spacing. The cone initiation mechanism is a combination of redeposition and intrinsic (from the carbon black filler). Treatment of LCP polymer without the carbon black produces redeposited cones under the same processing conditions.

As should be apparent, the size and density of the cones may affect the adhesion properties at the interface. The fluence, number of pulses, initiator geometry and distribution used may control both the size and the density of the cones. A very low fluence typically will have very little ablative effect on the substrate surface. Slightly higher fluence levels may ablate the surface to some extent causing the formation of small cones which are densely packed. A fluence which is too high may eliminate all cones since the ablation debris and the cone initiators may be ablated as well as the underlying surface.

Fig. 7 shows a simplified representation of another type of initiator. This type of initiator shadows the substrate surface by preventing laser light from hitting the surface of the substrate. More particularly, a mask 90 includes a plurality of gaps 94 defined by a plurality of features (initiators) 92. Features 92 prevent laser light from hitting surface 34 of substrate 36. Valleys 64 are etched due to ablation of the exposed surface areas. Valleys 64 define cones 66. The walls of cones 66 formed via masks 90 are generally steeper than those formed via redeposited initiators because cones are defined not by ablation debris but rather predominantly by valleys 64. It will be evident to those skilled in the art that the mask 90 may be positioned above the substrate surface as shown or placed in actual contact with the surface. In addition, various optical elements may be placed between the mask and the laser and between the mask and the part to further condition the light.

The decision of whether to use a mask may depend on whether the substrate material is able to form cones by redeposition. If the ablation threshold of the substrate is close to the ablation threshold of the ablation debris, and/or if the fluence cannot be adequately set within the range necessary to form redeposited cones. Then a projection mask or other cone initiator such as putting filler in the material or deposit material on the surface may be selected. Advantageously, the mask permits the fluence to be set such that it ablates the surface as well as any ablation debris in this manner the development of structures may be substantially independent of the formation of ablation debris. Additionally, using such a mask enables the use of a single fluence to treat a component composed of multiple materials where the multiple materials may have differing ablation thresholds. Thus, all of the materials within the component may be treated by a single pass through a laser in a single manufacturing step.

While the present invention has been particularly shown and described with reference to the foregoing preferred embodiments, those skilled in the art will understand that many variations may be made therein without departing from the scope of the invention as defined in the following claims.

## Claims

1. A method of preparing a surface for adhesion, the method comprising:
providing an initiator which is configured to shadow a portion of a surface of a substrate,
directing a laser toward the surface of the substrate to ablate a non-shadowed portion of the substrate, forming structures on the surface of the substrate; and
applying an adhesive to the surface of the substrate.

2. The method of claim 1, wherein said initiator is provided by permitting ablation debris, from initial ablation of the surface of the substrate to resettle on the surface of the substrate where the ablation debris has a higher ablation threshold than the surface of the substrate.

3. The method of claim 1, wherein said initiator is provided by providing a substrate having particles with an ablation threshold higher than an ablation threshold of the surface of the substrate.

4. The method of claim 1, wherein providing an initiator includes providing a mask.

5. The method of claim 1, wherein the substrate is formed from a liquid crystal polymer or a polyimide.

6. An interface between a first component and an adhesive , the interface comprising:
a first component having a surface prepared by providing initiators on the surface that are configured to partially shield a portion of the surface and by directing a laser toward the surface to ablate a non-shielded portion of the surface and further allowing ablated material to resettle to form structures on the surface; and
an adhesive applied to the prepared surface.

7. A printer comprising:
a print cartridge assembly configured to supply ink to the printer, the assembly having a surface prepared by providing initiators on the surface which shield a portion of the surface, and by directing a laser toward the surface to ablate a non-shielded portion of the surface and further allowing ablated material to resettle to form structures on the surfaces, and
an adhesive bonded to the prepared surface of the print cartridge assembly.

## Patentansprüche

1. Ein Verfahren zum Vorbereiten einer Oberfläche zur Haftung, wobei das Verfahren folgende Schritte aufweist:
Bereitstellen eines Initiators, der konfiguriert ist, um einen Abschnitt einer Oberfläche eines Substrats abzuschatten;
Richten eines Lasers in Richtung der Oberfläche des Substrats, um einen nichtabgeschatteten Abschnitt des Substrats abzutragen, was Strukturen auf der Oberfläche des Substrats bildet; und
Aufbringen eines Haftmittels auf die Oberfläche des Substrats.

2. Das Verfahren gemäß Anspruch 1, bei dem der Initiator durch ein Erlauben, dass sich Abtragepartikel aus einem anfänglichen Abtragen der Oberfläche des Substrats wieder auf der Oberfläche des Substrats absetzen, wobei die Abtragepartikel eine höhere Abtrageschwelle aufweisen als die Oberfläche des Substrats, bereitgestellt wird.

3. Das Verfahren gemäß Anspruch 1, bei dem der Initiator durch ein Bereitstellen eines Substrats, das Partikel mit einer Abtrageschwelle aufweist, die höher ist als eine Abtrageschwelle der Oberfläche des Substrats, bereitgestellt wird.

4. Das Verfahren gemäß Anspruch 1, bei dem das Bereitstellen eines Initiators ein Bereitstellen einer Maske umfasst.

5. Das Verfahren gemäß Anspruch 1, bei dem das Substrat aus einem Flüssigkristallpolymer oder einem Polyimid gebildet ist.

6. Eine Grenzfläche zwischen einer ersten Komponente und einem Haftmittel, wobei die Grenzfläche folgende Merkmale aufweist:
eine erste Komponente, die eine Oberfläche aufweist, die durch ein Bereitstellen von Initiatoren auf der Oberfläche, die konfiguriert sind, um einen Abschnitt der Oberfläche teilweise abzuschirmen, sowie durch ein Richten eines Lasers in Richtung der Oberfläche, um einen nichtabgeschirmten Abschnitt der Oberfläche abzutragen, und ferner ein Erlauben, dass sich abgetragenes Material wieder absetzt, um Strukturen auf der Oberfläche zu bilden, vorbereitet wird; und
ein Haftmittel, das auf die vorbereitete Oberfläche aufgebracht wird.

7. Ein Drucker mit folgenden Merkmalen:
einer Druckkassettenanordnung, die konfiguriert ist, um Tinte an den Drucker zu liefern, wobei die Anordnung eine Oberfläche aufweist, die durch ein Bereitstellen von Initiatoren auf der Oberfläche, die einen Abschnitt der Oberfläche abschirmen, sowie durch ein Richten eines Lasers in Richtung der Oberfläche, um einen nichtabgeschirmten Abschnitt der Oberfläche abzutragen, und ferner ein Erlauben, dass sich abgetragenes Material wieder absetzt, um Strukturen auf der Oberfläche zu bilden, vorbereitet wird, und
einem Haftmittel, das mit der vorbereiteten Oberfläche der Druckkassettenanordnung verbunden ist.

## Revendications

1. Méthode de préparation d'une surface pour l'adhésion, la méthode comprenant les étapes consistant à :
■ fournir un initiateur qui est configuré pour ombrer une partie d'une surface d'un substrat ;
■ diriger un laser vers la surface du substrat de manière à procéder à l'ablation d'une partie non ombrée du substrat, en formant des structures sur la surface du substrat ; et
■ appliquer un adhésif sur la surface du substrat.

2. Méthode selon la revendication 1, dans laquelle on fournit ledit initiateur en permettant aux débris de l'ablation résultant de l'ablation initiale de la surface du substrat, de se réinstaller sur la surface du substrat où les débris résultant de l'ablation présentent un seuil d'ablation plus élevé que la surface du substrat.

3. Méthode selon la revendication 1, dans laquelle on fournit un initiateur (56) en fournissant un substrat comportant des particules ayant un seuil d'ablation plus élevé qu'un seuil d'ablation de la surface du substrat.

4. Méthode selon la revendication 1, dans laquelle on fournit un initiateur en fournissant un masque.

5. Méthode selon la revendication 1, dans laquelle le substrat est réalisé dans un polymère cristal liquide ou un polyimide.

6. Interface entre un premier composant et un adhésif, l'interface comprenant :
■ un premier composant ayant une surface préparée en fournissant des initiateurs sur la surface qui sont configurés pour protéger partiellement une partie de la surface et en dirigeant un laser vers la surface afin de procéder à l'ablation d'une partie non protégée de la surface et en permettant en outre à la matière ayant subi une ablation de se réinstaller de manière à former une structure sur la surface ; et
■ un adhésif appliqué sur la surface préparée.

7. Imprimante comprenant :
■ un ensemble de cartouche d'impression configuré pour fournir de l'encre à l'imprimante, l'ensemble ayant une surface préparée en fournissant des initiateurs sur la surface qui protègent une partie de la surface et en dirigeant un laser vers la surface afin de procéder à l'ablation d'une partie non protégée de la surface et en permettant en outre à la matière ayant subi une ablation de se réinstaller sur la surface ; et
■ un adhésif lié à la surface préparée de l'ensemble de cartouche d'impression.
